# EUROPÄISCHE PATENTANMELDUNG

(11) **EP 1 629 957 A1**
(43) Veröffentlichungstag der Anmeldung: **01.03.2006**
(21) Anmeldenummer: 05017279.0
(22) Anmeldetag: 09.08.2005
(51) Int. Cl.: B29C 45/37, B29C 33/56, B29C 33/38, C23C 24/10, B22D 17/22

(54) **Spritzgiessform**

(30) Priorität: 24.08.2004 DE 102004040929
(71) Anmelder: Hachtel, Friedrich, 73431 Aalen (DE); Hachtel, Steffen, 73650 Winterbach (DE)
(72) Erfinder: Hachtel, Steffen, 73650 Winterbach (DE)
(74) Vertreter: Kohler Schmid Möbus

(57) **Zusammenfassung**

Bei einer Spritzgießform (1) mit zumindest einer Kavität (3), wobei zumindest im Bereich der Kavität (3) ein Träger (2) aus einem ersten Trägermaterial vorgesehen ist, das auf der einem herzustellenden Formteil zugewandten Seite eine Verschleißschutzschicht (4) aus einem zweiten Material mit einer höheren Verschleiß- und/oder Druckfestigkeit aufweist, sind das Trägermaterial und die Verschleißschutzschicht (4) stoffschlüssig miteinander verbunden.

## Beschreibung

Die Erfindung betrifft eine Spritzgießform mit zumindest einer Kavität, wobei zumindest im Bereich der Kavität ein Träger aus einem ersten Trägermaterial vorgesehen ist, das auf der einem herzustellenden Formteil zugewandten Seite eine Verschleißschutzschicht aus einem zweiten Material mit einer höheren Verschleiß- und/oder Druckfestigkeit aufweist als das Trägermaterial und ein Verfahren zur Herstellung einer Spritzgießform.

Ein Grundproblem beim Spritzgießen ist die Wärmeableitung aus den Kavitäten, um den Kunststoff abzukühlen und das Bauteil erstarren zu lassen. Dabei ist es bekannt, die Spritzgießform zu kühlen, um dies zu erreichen. Dies bedeutet, dass die Spritzgießform mit Kühlkanälen ausgerüstet ist. Die Anfertigung der Kühlkanäle ist schwierig und aufwändig, da die Kühlkanäle in der Regel nur durch Bohren eingebracht werden können. Dabei auftretende Kreuzbohrungen müssen abgestopft werden oder es muss mit Steigbohrungen gearbeitet werden. Da Spritzgießformen üblicherweise druckbeständig und verschleißfest ausgebildet sein müssen, sind sie in der Regel aus Stahl gefertigt. Kupfer oder Kupferlegierungen sind bessere Wärmeleiter als Stahl. Es ist deshalb ebenfalls bekannt, Spritzgießformen aus Kupfer oder Kupferlegierungen herzustellen. Allerdings sind aus Kupfer bzw. Kupferlegierungen hergestellte Spritzgießformen aufgrund geringerer Druck- und Verschleißfestigkeit mit Nachteilen behaftet.

Weiterhin ist es bekannt, auf vergleichsweise weiche Untergrundmaterialien, wie z. B. Kupfer, dünne verschleißfeste Beschichtungen aufzubringen, beispielsweise TIN im PVD-Verfahren. Allerdings blättern diese dünnen Schichten leicht von dem weichen Untergrundmaterial ab.

Aufgabe der vorliegenden Erfindung ist es deshalb, eine Spritzgießform und ein Verfahren zur Herstellung einer Spritzgießform vorzuschlagen, die Druck- und Verschleißfestigkeit mit einer guten Wärmeleitfähigkeit vereint.

Gelöst wird diese Aufgabe durch eine Spritzgießform der eingangs genannten Art, bei der das Trägermaterial und die Verschleißschutzschicht stoffschlüssig miteinander verbunden sind. Durch die stoffschlüssige Verbindung können im Vergleich zum Stand der Technik stabilere Anordnungen erreicht werden. Die Verschleißschutzschicht kann eine Schichtdicke bzw. Wandstärke von mehreren Millimetern aufweisen. Durch den zumindest zweischichtigen Aufbau der Spritzgießform ist es möglich, unterschiedliche Materialien mit unterschiedlichen Eigenschaften zu kombinieren, sodass insbesondere an der Stelle, die mit der Spritzgießmasse und dem daraus erzeugten Formteil in Berührung kommt, ein verschleißfestes Material vorgesehen werden kann. Im Sinne der Erfindung wird unter einer Spritzgießform auch ein Formeinsatz verstanden, wobei eine Spritzgießform mehrere Formeinsätze umfassen kann.

Besonders bevorzugt ist es, wenn das erste Trägermaterial eine höhere Wärmeleitfähigkeit aufweist als die Verschleißschutzschicht. Durch diese Maßnahme kann eine relativ dünne Verschleißschutzschicht eingesetzt werden und kann die Wärme von der Verschleißschutzschicht durch das Trägermaterial mit der höheren Wärmeleitfähigkeit abgeleitet werden. Die schnelle Ableitung von Wärme hat den Vorteil, dass maßhaltigere Formteile in kürzeren Zyklen gefertigt werden können. Dadurch, dass das Trägermaterial durch die Verschleißschutzschicht geschützt ist, kann als Trägermaterial ein weicheres Material zum Einsatz kommen, das jedoch eine bessere Wärmeleitfähigkeit aufweist.

Besonders bevorzugt ist es, wenn das erste Trägermaterial Kupfer oder eine Kupferlegierung ist. Diese Materialien weisen eine besonders gute Wärmeleitfähigkeit auf.

Vorteilhafterweise ist das zweite Material Metall, insbesondere Stahl. Mit Stahl kann eine besonders gute Druck- und Verschleißfestigkeit der Spritzgießform erreicht werden.

Eine stoffschlüssige Verbindung kann insbesondere erreicht werden, wenn die Verschleißschutzschicht im so genannten DMD-Verfahren auf das Trägermaterial aufgebracht ist. Insbesondere können im DMD-Verfahren Wandstärken von mehreren Millimetern erzeugt werden, was zu besonders stabilen Anordnungen führt. Dabei kann vorgesehen sein, dass ebenfalls im DMD-Verfahren eine Zwischenschicht zwischen Verschleißschutzschicht und Trägermaterial aufgebracht ist, um Verspannungen zwischen den unterschiedlichen Materialien zu vermeiden. Das DMD-Verfahren (direct metal deposition) wurde von der Firma Trumpf, Ditzingen entwickelt. Damit können verschiedene metallische Werkstoffe (Werkzeugstahl, Kupfer, Gusseisen und andere) mittels eines Lasers miteinander verschweißt werden. Dem ursprünglichen Grundwerkstoff wird mittels Ringdüse ein weiterer metallischer Werkstoff in Pulverform zugegeben. Dabei wird der Grundwerkstoff durch den Laser gezielt und örtlich sehr begrenzt aufgeschmolzen und das Pulver in das Schmelzbad eingesprüht. So können auf einen vorgearbeiteten Grundwerkstoff bzw. das Trägermaterial ein oder mehrere andere Werkstoffe in Schichten aufgebracht werden. Beispielsweise kann somit Werkzeugstahl auch auf einen Grundwerkstoff aus Kupfer oder eine Kupferlegierung (z. B. CuCoBe-Legierung (AMCO)) aufgebracht werden. Der Grundstoff kann als Kern bzw. Träger einer Spritzgießform bzw. eines Formeinsatzes verwendet werden. Da im DMD-Verfahren an unterschiedlichen Stellen unterschiedliche Schichtdicken realisiert werden können, können gleichzeitig mit dem Aufbringen der Verschleißschutzschicht die Strukturen der Spritzgießform, insbesondere die Kavitäten ausgebildet werden.

Besonders bevorzugt ist es, wenn der Träger ebenfalls im DMD-Verfahren hergestellt ist. Im DMD-Verfahren lassen sich Materialeigenschaften und Geometrien nahezu beliebig kombinieren. Durch das DMD-Verfahren können daher, da Schichten unterschiedlicher Dicke an unterschiedlichen Stellen aufgebracht werden können, die Konturen der Spritzgießform bereits bei der Herstellung des Kerns im DMD-Verfahren erzeugt werden.

Eine besonders gute Wärmeableitung kann erzielt werden, wenn das Trägermaterial zumindest einen Kühlmittelkanal aufweist. Vorzugsweise ist der Kühlmittelkanal zumindest abschnittsweise entlang der Kontur der Kavität geführt, da dadurch aus der unmittelbaren Nähe der Kavität bzw. direkt an den Stellen, an denen die stärkste Erwärmung erfolgt, Wärme abgeleitet werden kann.

Die Aufgabe wird außerdem gelöst durch ein Verfahren zur Herstellung einer Spritzgießfom, bei dem zumindest im Bereich einer Kavität auf einen Träger aus einem ersten Trägermaterial stoffschlüssig eine Verschleißschutzschicht aus einem zweiten Material aufgebracht wird. Eine derart hergestellte Spritzgießform ist zum einen druck- und verschleißbeständig und zum anderen kann die Verschleißschutzschicht so dünn gewählt werden, dass zwar die Druck- und Verschleißfestigkeit sichergestellt ist, aber dennoch eine gute Wärmeableitung über das Trägermaterial mit einer höheren Wärmeleitfähigkeit erfolgt. Besonders bevorzugt ist es, wenn die Verschleißschutzschicht im DMD-Verfahren aufgebracht wird. Dadurch wird eine stoffschlüssige Verbindung der Schichten miteinander realisiert.

Vorteilhaft ist es, wenn der Träger im DMD-Verfahren hergestellt wird. Insbesondere ist es dadurch möglich, den Träger und die Verschleißschutzschicht in einem einzigen Herstellungsvorgang herzustellen.

Bei einer bevorzugten Verfahrensvariante kann vorgesehen sein, dass die Kontur der Spritzgießform, insbesondere die zumindest einer Kavität, im DMD-Verfahren hergestellt wird. Im DMD-Verfahren können sehr dünne Schichten mit einer sehr hohen Genauigkeit aufgebracht werden. Insbesondere können die Schichten an unterschiedlichen Stellen unterschiedlich dick ausgebildet werden. Dadurch ist es möglich, beliebige Konturen nachzuformen. Dies ermöglicht die Aufbringung von beliebigen Geometrien mit unterschiedlichen Wanddicken auf standardisierte Grundkörper (Träger) mit einfachen Geometrien. Im Unterschied dazu kann bei konventionellen Beschichtungsverfahren die Beschichtungswanddicke nur gleichmäßig aufgetragen werden, sodass der Grundkörper bereits die endgültige Kontur aufweisen muss.

Bei einer besonders vorteilhaften Verfahrensvariante kann vorgesehen sein, dass bei der Herstellung des Trägers wenigstens ein an die Kontur der Kavität zumindest abschnittsweise angepasster Kühlmittelkanal gebildet wird. Durch diese Maßnahme erübrigt sich ein nachträgliches Einbringen von Kühlmittelkanälen mittels Bohren. Außerdem erhält man eine größere Flexibilität in der Anordnung der Kühlmittelkanäle. Diese können insbesondere so angeordnet werden, dass sie im Wesentlichen der Kontur der Spritzgießform folgen. Somit kann Wärme besonders gut aus der Spritzgießform abgeleitet werden. Außerdem können weniger Kühlmittelkanäle notwendig sein.

Eine Spritzgießform kann einen oder mehrere Formeinsätze aufweisen, wobei jeder Formeinsatz einen Träger aus einem ersten gut wärmeleitfähigen Material aufweisen kann, der im Bereich der Kavität mit einer Verschleißschutzschicht beschichtet ist. Wenn an bestimmten Stellen der Spritzgießform eine sehr gute Wärmeleitfähigkeit benötigt wird, der Verschleißschutz jedoch vernachlässigt werden kann, ist es außerdem denkbar, Formeinsätze zu verwenden, die ausschließlich aus dem Trägermaterial bestehen, wobei die Formeinsätze im DMD-Verfahren hergestellt sein können.

Ein Ausführungsbeispiel einer Spritzgießform ist nachstehend anhand der Figuren der Zeichnung näher erläutert.

Es zeigen:
- Fig. 1: schematisch einen Querschnitt einer Spritzgießform;
- Fig. 2: schematisch einen Querschnitt eines zweiten Ausführungsbeispiels einer Spritzgießform.

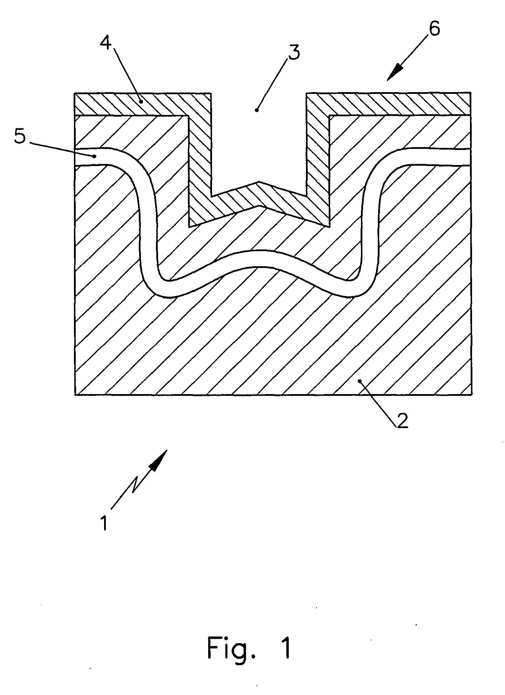

Die Spritzgießform 1 der Fig. 1 weist einen Träger 2 aus einem ersten Trägermaterial auf. Im Bereich einer Kavität 3 weist der Träger 2 eine Verschleißschutzschicht 4 auf, die eine höhere Druck- und Verschleißfestigkeit als das Material des Trägers 2, jedoch eine schlechtere Wärmeleitfähigkeit aufweist. Die Verschleißschutzschicht 4 ist stoffschlüssig mit dem Material des Trägers 2 verbunden und wurde im DMD-Verfahren aufgebracht. Der Träger 2 selbst wurde ebenfalls im DMD-Verfahren hergestellt, wobei bei der Herstellung bereits Kühlmittelkanäle 5 gebildet wurden, die im Wesentlichen an die Kontur der dem zu bildenden Formteil zugewandten Seite 6 der Spritzgießform 1 angepasst ist. Durch die Kombination des Kühlmittelkanals 5 mit dem gut wärmeleitfähigen Material des Trägers 2 wird Wärme aus der Verschleißschutzschicht 4 besonders gut abgeleitet.

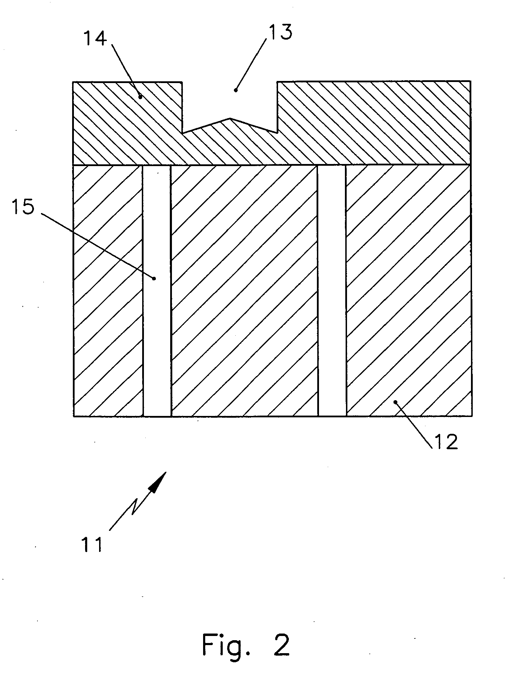

Die Spritzgießform 11 der Fig. 2 weist einen vorgefertigten, standardisierten Träger 12 auf, der aus einfachen geometrischen Formen besteht und standardisierte Kühlmittelkanäle 15 aufweist. Die Verschleißschutzschicht 14 ist stoffschlüssig mit dem Träger 12 verbunden und im DMD-Verfahren aufgebracht. Durch die unterschiedlichen Wandstärken an verschiedenen Stellen kann die Verschleißschutzschicht 14 im Bereich der Kavität 13 die Geometrie des Spritzgießteils bilden.

## Patentansprüche

1. Spritzgießform (1, 11) mit zumindest einer Kavität (3, 13), wobei zumindest im Bereich der Kavität (3, 13) ein Träger (2, 12) aus einem ersten Trägermaterial vorgesehen ist, das auf der einem herzustellenden Formteil zugewandten Seite eine Verschleißschutzschicht (4, 14) aus einem zweiten Material mit einer höheren Verschleiß- und/oder Druckfestigkeit aufweist, **dadurch gekennzeichnet, dass** das Trägermaterial und die Verschleißschutzschicht (4, 14) stoffschlüssig miteinander verbunden sind.

2. Spritzgießform nach Anspruch 1, **dadurch gekennzeichnet, dass** das erste Trägermaterial eine höhere Wärmeleitfähigkeit aufweist als die Verschleißschutzschicht (4, 14).

3. Spritzgießform nach einem der vorhergehenden Ansprüche, **dadurch gekennzeichnet, dass** das erste Trägermaterial Kupfer oder eine Kupferlegierung ist.

4. Spritzgießform nach einem der vorhergehenden Ansprüche, **dadurch gekennzeichnet, dass** das zweite Material Metall, insbesondere Stahl, ist.

5. Spritzgießform nach einem der vorhergehenden Ansprüche, **dadurch gekennzeichnet, dass** die Verschleißschutzschicht (4, 14) im DMD-Verfahren auf das Trägermaterial aufgebracht ist.

6. Spritzgießform nach einem der vorhergehenden Ansprüche, **dadurch gekennzeichnet, dass** die Verschleißschutzschicht (4, 14) an unterschiedlichen Stellen verschiedene Wanddicken aufweist.

7. Spritzgießform nach einem der vorhergehenden Ansprüche, **dadurch gekennzeichnet, dass** der Träger (2) im DMD-Verfahren hergestellt ist.

8. Spritzgießform nach einem der vorhergehenden Ansprüche, **dadurch gekennzeichnet, dass** das Trägermaterial zumindest einen Kühlmittelkanal (5) aufweist.

9. Spritzgießform nach Anspruch 8, **dadurch gekennzeichnet, dass** der Kühlmittelkanal (5) zumindest abschnittsweise entlang der Kontur der Kavität (3) geführt ist.

10. Verfahren zur Herstellung einer Spritzgießform, insbesondere nach einem der vorhergehenden Ansprüche, **dadurch gekennzeichnet, dass** zumindest im Bereich einer Kavität (3) auf einen Träger (2, 12) aus einem ersten Trägermaterial stoffschlüssig eine Verschleißschutzschicht (4) aus einem zweiten Material aufgebracht wird.

11. Verfahren nach Anspruch 10, **dadurch gekennzeichnet, dass** die Verschleißschutzschicht (4) im DMD-Verfahren aufgebracht wird.

12. Verfahren nach einem der vorhergehenden Ansprüche 10 oder 11, **dadurch gekennzeichnet, dass** der Träger (2) im DMD-Verfahren hergestellt wird.

13. Verfahren nach einem der Ansprüche 10 bis 12, **dadurch gekennzeichnet, dass** die Kontur der Spritzgießform (1), insbesondere die zumindest eine Kavität (3), im DMD-Verfahren hergestellt wird.

14. Verfahren nach einem der vorhergehenden Ansprüche 12 oder 13, **dadurch gekennzeichnet, dass** bei der Herstellung des Trägers (2) wenigstens ein an die Kontur der Kavität (3) zumindest abschnittsweise angepasster Kühlmittelkanal (5) gebildet wird.
